# EUROPÄISCHE PATENTSCHRIFT

(11) **EP 1 306 593 B1**
(45) Veröffentlichungstag und Bekanntmachung des Hinweises auf die Patenterteilung: **05.03.2008**
(21) Anmeldenummer: 02015214.6
(22) Anmeldetag: 09.07.2002
(51) Int. Cl.: F16K 1/32, B05B 1/30, B05B 7/12

(54) **Ventilnadel, insbesondere für Spritzbeschichtungsflüssigkeit**
Valve needle, used in particular in spraying of coating liquids
Aiguille de valve, utilisée en particulier dans la pulvérisation de liquides de revêtement

(30) Priorität: 27.10.2001 DE 10153142
(43) Veröffentlichungstag der Anmeldung: 02.05.2003
(73) Patentinhaber: ITW Oberflächentechnik GmbH & Co.KG, 63128 Dietzenbach (DE)
(72) Erfinder: Dankert, Manfred, 63322 Rödermark (DE)
(74) Vertreter: Vetter, Ewald Otto

(56) Entgegenhaltungen:
- DE-A1- 2 535 902
- US-A- 3 155 367
- US-A- 3 870 233
- US-A- 4 408 745
- US-A- 4 653 721

## Beschreibung

Die Erfindung betrifft eine Ventilnadel, insbesondere für Spritzbeschichtungsflüssigkeit, gemäß dem Oberbegriff von Anspruch 1.

Eine Ventilnadel dieser Art ist aus der US 3,870,233 bekannt.

Die Erfindung betrifft insbesondere eine Ventilnadel, enthaltend einen einteiligen Schaft, der einen vorderen Schaftendabschnitt aufweist, welcher die Nadelspitze bildet.

Ferner betrifft die Erfindung Ventile, Geräte und Einrichtungen, welche mindestens eine solche Ventilnadel enthalten, je insbesondere für Spritzbeschichtungsflüssigkeit. "Geräte" sind insbesondere "Beschichtungsflüssigkeits-Spritzbeschichtungsgeräte", welche manuell tragbare und bedienbare oder maschinell tragbare Geräte sein können (manuel or automatic liquid spray coating guns). Sie werden auch als Spritzpistolen bezeichnet. "Geräte" sind ferner Verteilergeräte und Flüssigkeitswechselgeräte, welche eine oder mehrere solche Ventilnadeln enthalten, für beliebige Flüssigkeiten, insbesondere aber für Beschichtungsflüssigkeiten. Hierzu gehören auch Farbwechselventile, durch welche einem Spritzbeschichtungsgerät alternativ verschiedene Beschichtungsflüssigkeiten, vorzugsweise auch Leitungsreinigungsfluid (flüssig oder gasförmig) zuführbar sind. "Einrichtungen" sind Hydraulikschaltungen und Installationen, welche mindestens ein solches Ventil und/oder ein solches Gerät mit mindestens einer Ventilnadel enthalten, je insbesondere für Beschichtungsflüssigkeit.

Die DE 196 50 781 A1 und DE 196 54 514 A1 zeigen Spritzbeschichtungsgeräte für Beschichtungsflüssigkeit mit einer Ventilnadel. Die Ventilnadel ist durch Druckgas, vorzugsweise Druckluft, in der einen Längsrichtung und durch die Kraft einer Druckfeder in der entgegengesetzten Längsrichtung bewegbar, die je auf den Kolben der Ventilnadel wirken. Der Kolben und die Ventilnadel sind zusammen ein einstückiges Teil. In der Praxis wird hierfür Edelstahl verwendet. Die Ventilnadel wird durch die an ihr reibende Flüssigkeit und durch Reibung auf einem Ventilöffnungsrand abgenutzt.

Durch die Erfindung soll die Aufgabe gelöst werden, die Benutzungs-Lebensdauer der Ventilnadel zu verlängern. Hierbei sollen die Herstellungskosten nicht höher, sondern eher niedriger als beim Stand der Technik sein unter Berücksichtigung der Materialkosten und der Bearbeitungskosten. Ferner soll das Material der Ventilnadel verträglich sein mit verschiedenen Beschichtungsflüssigkeiten. Das Material der Ventilnadel soll aber auch verträglich sein mit dem Material des Ventilsitzes, mit welchem die Ventilnadel in einem Ventil zusammenwirkt. Das Material und die Benutzungs-Lebensdauer des Ventilsitzes darf nicht durch das Material der Ventilnadel beeinträchtigt werden.

Diese Aufgabe wird gemäß der Erfindung durch die Merkmale von Patentanspruch 1 gelöst. Ferner wird diese Aufgabe gemäß der Erfindung durch die Merkmale von Patentanspruch 7 gelöst.

Gemäß den unabhängigen Patentansprüchen betrifft die Erfindung eine Ventilnadel, enthaltend einen einteiligen Schaft, der einen vorderen Schaftendabschnitt aufweist, welcher die Nadelspitze bildet, wobei am Schaft ein Kolben befestigt ist und der Schaft aus einem anderen Material besteht als der Kolben.

Ferner betrifft die Erfindung die Verwendung einer solchen Ventilnadel und Spritzbeschichtungsgeräte, Steuergeräte, Verteilergeräte und Spritzbeschichtungseinrichtungen, welche eine solche Ventilnadel enthalten.

Vorteile der Erfindung sind insbesondere: längere Betriebs-Lebensdauer der Ventilnadel durch geringeren Abrieb ihres Schaftes, insbesondere an der Nadelspitze, durch die Beschichtungsflüssigkeit. Preiswertere Produktionskosten der Ventilnadel insbesondere dadurch, daß der Ventilnadelschaft nicht mehr aus einem Vollmaterial herausgearbeitet zu werden braucht, welches den Durchmesser des Kolbens hat, da der Durchmesser des Kolbens zur Erzeugung eines pneumatischen oder hydraulischen axialen Betätigungsdruckes der Ventilnadel einen wesentlich größeren Durchmesser als der Schaft der Ventilnadel benötigt. Durch die preiswerteren Produktionskosten der Ventilnadel ist es preiswerter, für verschiedene Spritzbeschichtungsgeräte und andere Spritzbeschichtungseinrichtungen umtauschbare Ventilnadeln aus verschiedenen Materialien zu verwenden, um chemische Reaktionen mit der Beschichtungsflüssigkeit in Abhängigkeit von deren Beschaffenheit zu vermeiden. Der Kolben kann aus einem Material hergestellt werden, welches ein niedrigeres spezifisches Gewicht als das Material des Schaftes hat, welches preiswerter als das Material des Schaftes ist, und welches leichter bearbeitbar ist als das Material des Schaftes.

Weitere Merkmale der Erfindung sind in den Unteransprüchen enthalten.

Die Erfindung wird im folgenden mit Bezug auf die Zeichnungen anhand von bevorzugten Ausführungsformen als Beispiele beschrieben. In den Zeichnungen zeigen
- Fig. 1: eine Seitenansicht, teilweise im Axialschnitt, einer Ventilnadel nach der Erfindung,
- Fig. 2: schematisch einen Axialschnitt durch ein Spritzbeschichtungsgerät für Beschichtungsflüssigkeit mit der Ventilnadel von Fig. 1 in Seitenansicht,
- Fig. 3: eine weitere Ausführungsform einer Ventilnadel nach der Erfindung in Seitenansicht, teilweise im Axialschnitt,

- Fig.4: eine nicht von den Patentansprüchen umfasste Ventilnadel in Seitenansicht, teilweise im Axialschnitt,
- Fig. 5: eine nochmals weitere Ausführungsform einer Ventilnadel nach der Erfindung in Seitenansicht, teilweise im Axialschnitt.

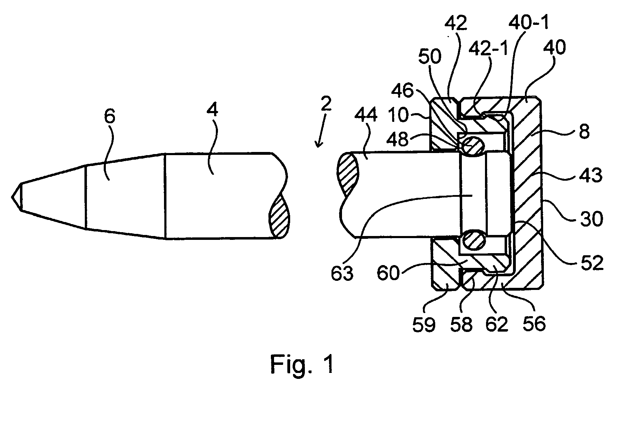

Die Ventilnadel 2 nach Fig. 1 enthält einen einteiligen Schaft 4, der einen vorderen Schaftabschnitt 6 aufweist, welcher als Nadelspitze ausgebildet ist. Die Nadelspitze kann "stumpf" sein. Dieser vordere Endabschnitt ist vorzugsweise kegelspitzförmig oder kegelstumpfförmig. Er kann in Seitenansicht gesehen glatt oder einfach oder mehrfach abgestuft sein.

Ferner enthält die Ventilnadel 2 einen Kolben 8, der an dem Schaft 4 befestigt ist und aus einem anderen Material als der Schaft besteht.

Vorzugsweise besteht der Schaft 4 aus einem abriebfesteren Material als der Kolben 8. Gleichzeitig oder alternativ ist darauf zu achten, daß der Schaft 4 aus einem Material besteht, welches mit der Beschichtungsflüssigkeit verträglich ist, insbesondere nicht chemisch reagiert.

Gemäß der bevorzugten Ausführungsform besteht der Schaft nahtlos einstückig aus einem der folgenden Materialien: technische Keramik, insbesondere Silikat-Keramik, Oxid-Keramik, Nicht-Oxid-Keramik, letzteres insbesondere in Form von Karbide oder Nitride, Zirkoniumsilikat, Mischungen von zwei oder mehr der vorgenannten Materialien. Hierunter werden Materialien verstanden, deren Oberfläche abriebfester als Edelstahl ist. Das Keramikmaterial kann Zusätze enthalten, z.B. Bindemittel, Gleitmittel, Farbmittel. Der Schaft ist ein Vollmaterialkörper.

Wenn der Schaft 4 und der Kolben 8 zusammen aus einem einstückigen Material gemäß dem Stand der Technik gebildet werden, dann ist die Herstellung sehr teuer.

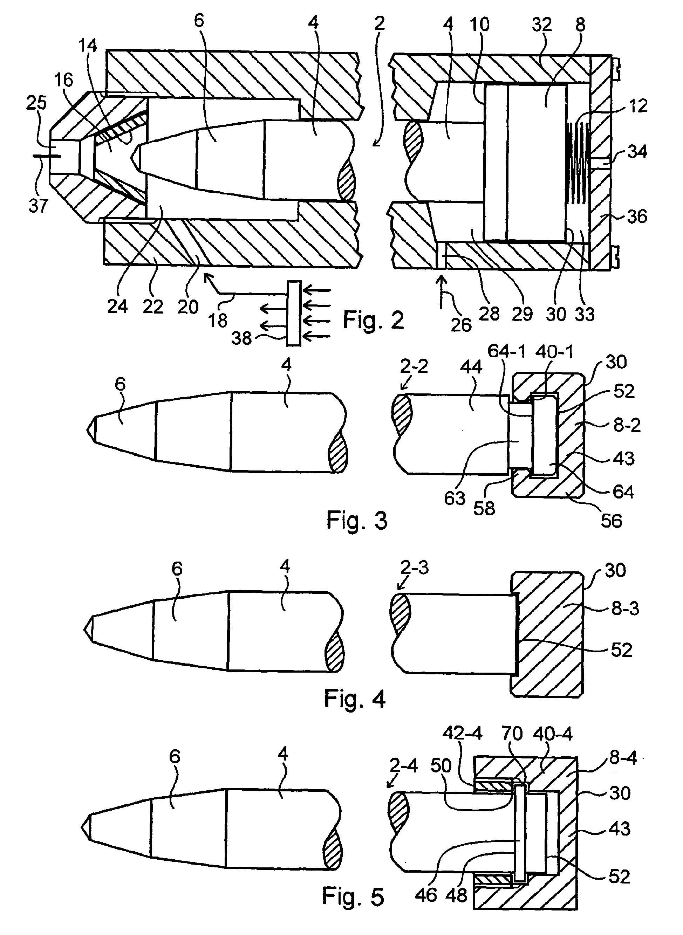

Hierbei ist nicht nur das Keramikmaterial teuer, sondern die Reduzierung eines Rohkörpers vom Durchmesser des Kolbens 8 auf den wesentlich kleineren Durchmesser des Schaftes 4 durch Abschleifen des Rohkörpers. Der Durchmesser des Kolbens 8 ist wesentlich größer als der Durchmesser des Schaftes 4 im Bereich des Kolbens 8. Dadurch hat der Kolben 8 eine den Schaft 4 ringförmig umgebende, nach vorne zeigende Stirnfläche 10, die einen ausreichend großen Querschnitt hat, um mit einem verhältnismäßig kleinen Druck auf sie durch ein Druckfluid, insbesondere Druckflüssigkeit oder vorzugsweise Druckgas, vorzugsweise Druckluft, eine große Axialkraft zu erzeugen, mit welcher die Ventilnadel 10 entgegen einer relativ starken Druckfeder 12 (Fig. 2) von einem Ventilsitz 14 weg nach hinten bewegbar ist, um eine Ventilöffnung 16 zu öffnen.

Gemäß der Erfindung sind der Schaft 4 und der Kolben 8 separate, jedoch aneinander befestigte Teile.

Bei geöffneter Ventilöffnung 16 gemäß Fig. 2 kann Beschichtungsflüssigkeit 18 von einer Gehäuseöffnung 20 des Gehäuses 22 eines Spritzbeschichtungsgerätes in eine Ventilkammer 24 und von dieser am verjüngten vorderen Endabschnitt 6 des Schaftes 4 entlang durch die Ventilöffnung 16 strömen und dann durch eine Düsenöffnung 25 auf einen nicht gezeigten Gegenstand gespritzt werden. Der Ventilsitz 14 kann mit einer Beschichtung oder einem elastischen Ring versehen sein, um eine Abnutzung des vorderen Endabschnittes 6 des Schaftes 4 auf dem Ventilsitz zu vermeiden oder zu reduzieren, und um einen dichten Ventilverschluß durch dichte Auflage des Schaftes 4 auf dem Ventilsitz 14 zu gewährleisten, wenn das Ventil geschlossen werden soll.

Das Druckfluid 26, Druckfüssigkeit oder vorzugsweise Druckluft oder ein anderes Druckgas, gelangt durch eine weitere Gehäuseöffnung 28 auf die vordere Stirnseite 10 des Kolbens 8 um den Schaft 4 herum.

Zum Schließen des Ventils kann auf der nach hinten zeigenden Stirnseite 30 des Kolbens 8 ebenfalls ein Fluiddruck aufgebracht werden. Bei der in Fig. 2 gezeigten bevorzugten Ausführungsform wird jedoch der Ventilschließdruck durch die Druckfeder 12 erzeugt, welche die Ventilnadel 2 (Schaft 4 mit Kolben 8) axial nach vorne auf den Ventilsitz 14 drängt.

Die Ventilnadel 2 (Schaft 4, Kolben 8) ist in dem Gehäuse 22 axial geführt. Der Kolben 8 ist in einem Zylinder 32 axial geführt, welcher durch das Gehäuse 22 gebildet ist. Das Gehäuse 22 kann einteilig oder mehrteilig sein. Der Zylinderraum bildet auf der vorderen Stirnseite 10 des Kolbens 8 eine Fluiddruckkammer 29 für das Druckfluid und auf der hinteren Stirnseite 30 des Kolbens 8 einen Kammerbereich 33, welcher vorzugsweise entlüftet ist, z. B. durch eine Entlüftungsöffnung 34, und in welcher die Druckfeder 12 mit axialer Vorspannung zwischen die hintere Stirnseite 30 des Kolbens 8 und eine hintere Stirnwand 36 des Gehäuses 22 axial eingespannt ist.

Das Spritzbeschichtungsgerät kann eine oder mehrere Hochspannungselektroden 37 zur elektrostatischen Aufladung des Beschichtungsmaterials enthalten.

Die Ventilnadel 2 und der Ventilsitz 14 bilden zusammen ein Ventil. Solche Ventile können sich nicht nur in einem Spritzbeschichtungsgerät gemäß Fig. 2 befinden, sondern beispielsweise auch in einem Verteilergerät oder Flüssigkeitswechselgerät, z.B. Farbwechsler 38. Dieses kann mehrere solche Ventile enthalten zur alternativen Zufuhr von verschiedenen Beschichtungsflüssigkeiten oder von Reinigungsfluid (Flüssigkeit oder Gas) in die Ventilkammer 24.

Der Kolben besteht vorzugsweise aus Edelstahl, Messing oder Kunststoff. Auch andere Materialien sind möglich. Sie sollten gute Gleiteigenschaften im Zylinder 32 haben.

Wie Fig. 1 im Detail zeigt, ist der Kolben 8 nicht einteilig, sondern zweiteilig ausgebildet. Er enthält einen kappenförmigen oder becherförmigen, einstückigen hinteren Kolbenteil 40 und einen an diesem befestigten, ringförmigen, einstückigen vorderen Kolbenteil 42. Der hintere Kolbenteil 40 bildet einen Kolbenboden 43.

Der hintere Endabschnitt 44 des Schaftes 4 erstreckt sich durch den ringförmigen vorderen Kolbenteil 42. Der hintere Endabschnitt 44 des Schaftes 4 ist mit einem ihn umgebenden ringförmigen Vorsprung 46 versehen, welcher radial über ihn übersteht und dadurch im überstehenden Bereich eine nach vorne zeigende Anschlagfläche 48 aufweist, die einer nach hinten zeigenden Anschlagfläche 50 des vorderen Kolbenteils 42 axial gegenüberliegt und dadurch ein Abgleiten dieses vorderen Kolbenteils 42 und damit des gesamten Kolbens 8 auf dem Schaft 4 nach hinten verhindert.

Der Kolbenboden 43 liegt gegenüber einer nach hinten zeigenden Stirnfläche 52 des Schaftes 4 und sitzt auf dieser auf und verhindert dadurch ein Abgleiten des Kolbens 8 auf dem Schaft 4 nach vorne.

Da der Kolben 8 durch den Kolbenboden 43 einen geschlossenen Querschnitt hat, kann kein Druckfluid (z.B. Druckluft) von der Fluiddruckkammer 29 in den hinteren Kammerbereich 33 gelangen.

Für die Befestigung des ringförmigen vorderen Kolbenteils 42 am hinteren Kolbenteil 40, so daß beide axial nicht auseinandergehen können, gibt es mehrere Möglichkeiten, beispielsweise zwischen ihnen gebildete Gewinde, eine Klebeverbindung, Schweißverbindung oder Rastverbindung (Schnappverbindung).

Gemäß der bevorzugten Ausführungsform ist eine Rastverbindung oder Schnappverbindung vorgesehen. Diese kann entsprechend Fig. 1 ausgebildet sein. Der ringförmige vordere Kolbenteil 42 und der hintere Kolbenteil 40 sind entsprechend Fig. 1 axial ineinander steckbare Teile. Der ringförmige vordere Kolbenteil 42 hat mindestens eine (oder mehrere) nach vorne zeigende Rastfläche 42-1 und der hintere Kolbenteil 40 hat mindestens eine (oder mehrere) nach hinten zeigende Rastfläche 40-1, die in einer vorbestimmten Zusammenstecktiefe der beiden Teile 40 und 42 automatisch ineinander radial einrasten oder einschnappen durch radiale Materialspannung in diesen beiden Teilen 40 und 42. Die beiden, vorzugsweise sich radial erstreckenden, Rastflächen 40-1 und 42-1 haben gleiche Durchmesserbereiche, so daß die beiden Teile 40 und 42 nur durch radiale Expansion des radial äußeren Teiles und/oder durch radiale Kompression des radial inneren Teiles der beiden Teile 40 und 42 zusammensteckbar sind.

Bei der Ausführungsform von Fig. 1 hat der hintere Kolbenteil 40 einen sich vom Kolbenboden 43 nach vorne erstreckenden hohlzylindrischen Kolbenschaft 56, der eine, z.B. ringförmige Nase 58 aufweist, deren axial hinteres Ende die nach hinten zeigende Rastfläche 40-1 des hinteren Kolbenteils 40 im axialen Abstand vom Kolbenboden 43 bildet. Der vordere Kolbenteil 42 hat zusammen einteilig gebildet einen ringscheibenförmigen vorderen Abschnitt 59 und einen davon rohrstutzenartig axial nach hinten wegragenden Nabenabschnitt 60, der sich teleskopartig in den Kolbenschaft 56 erstreckt und mit einer, z.B. ringförmigen, radial nach außen sich erstreckenden Nase 62 versehen ist, welche die nach vorne zeigende Rastfläche 42-1 des vorderen Kolbenteils 42 bildet.

Die radial nach innen ragende ringförmige Nase 58 des hinteren Kolbenteils 40 hat einen Innendurchmesser, welcher nur wenig kleiner ist, beispielsweise nur wenige Zehntel Millimeter kleiner ist, als der Außendurchmesser der ringförmigen, radial nach außen ragenden Nase 62 des vorderen Kolbenteils 42. Damit die beiden Nasen 58 und 62 axial übereinander schiebbar sind und dann hintereinander liegend radial ineinander schnappen können, muß der Kolbenschaft 56 radial federelastisch expandierbar und/oder der Nabenteil 60 radial federelastisch kontraktierbar sein durch eine axiale Kraft zum Zusammendrücken der beiden Teile 40 und 42. Stattdessen könnte der Kolbenschaft 56 durch Erwärmen radial expandiert werden, damit der Kolbenschaft 56 auf den Nabenteil 60 gesteckt werden kann. Zum leichteren Zusammenstecken ist es von Vorteil, wenn die axial äußeren Umfangsränder der Nasen 58 und 62 abgeschrägt sind.

Der ringförmige Vorsprung 46 des Schaftes 4 kann durch einen einteilig mit dem Schaft 4 gebildeten Ringbund gebildet sein. Dieser Ringbund braucht radial nur wenig über den hinteren Schaftabschnitt 44 überzustehen, da er lediglich den Kolben 8 axial festhalten muß. Deshalb kann sein radialer Überstand wesentlich kleiner sein als der radiale Überstand des Kolbens 8 über den Schaft 4. Der radiale Überstand des Kolbens 8 mit seiner vorderen Stirnfläche 10 muß deshalb größer sein, damit ein kleiner Fluiddruck eine große Axialkraft auf den Kolben 8 und damit auch auf den Schaft 4 erzeugen kann. Wenn der Schaft 4 und sein ringförmiger Vorsprung 46 einstückig hergestellt werden, braucht deshalb von einem Rohkörper, welcher den Außendurchmesser des ringförmigen Vorsprunges 46 hat, nur sehr wenig, beispielsweise wenige Zehntel Millimeter, abgeschliffen zu werden, um den Schaft 4 mit seinem etwas kleineren Durchmesser als der Durchmesser des Vorsprunges 46 zu bilden.

Gemäß bevorzugter Ausführungsform der Erfindung wird jedoch im hinteren Endabschnitt 44 des Schaftes 4 eine ringförmige Umfangsnut 63 von geringer Tiefe gebildet, beispielsweise nur wenige Zehntel Millimeter Tiefe, in welche ein Sicherungsring 46 als ringförmiger Vorsprung 46 eingefügt ist.

Fig. 3 zeigt eine Ventilnadel 2-2, welche einen Schaft 4 aus einem der genannten Materialien mit einer ringförmigen Umfangsnut 63 im Umfang des hinteren Schaftabschnittes 44 und einen am Schaft befestigten, nahtlos einstückig gebildeten Kolben 8-2 enthält. Von einem Kolbenboden 43 dieses Kolbens 8-2 erstreckt sich ein Kolbenschaft 56 axial nach vorne über den hinteren Endteil 64 des Schaftes 4, welcher hinter der Umfangsnut 63 liegt. Der Kolbenschaft 56 hat an seinem vorderen Ende eine radial nach innen vorspringende ringförmige Nase 58 mit der nach hinten zeigenden Rastfläche 40-1 von Fig. 1. Die Nase 58 greift jedoch nicht in einen zweiten Kolbenteil ein, sondern in die Umfangsnut 63 des Schaftes 4. Der ringbundartige hintere Endteil 64 des Schaftes 4 hat in der Umfangsnut 63 eine nach vorne zeigende Rastfläche 64-1, vor welcher die nach hinten zeigende Rastfläche 40-1 des Kolbenschaftes 56 radial einrastet, wenn der Kolbenschaft 56 über den hinteren Endteil 64 des Schaftes 4 teleskopartig hinweggedrückt wird. Im radial entspannten Zustand ist der Innendurchmesser der Nase 58 des Kolbenschaftes 56 kleiner als der Außendurchmesser des hinteren Schaftteiles 64. Der Kolbenboden 43 liegt auf der nach hinten zeigenden Stirnfläche 52 des Schaftes 4 auf und begrenzt die Aufstecktiefe des Kolbens 8-2 auf den Schaft 4. Der vordere Innenumfangsrand des Kolbens 8-2 und der hintere Außenumfangsrand des Schaftes 4 sind vorzugsweise abgeschrägt, damit der Kolben 8-2 leichter auf den hinteren Endteil 64 aufgesteckt und axial hinweggedrückt werden kann zum Einschnappen der Nase 58 in die Umfangsnut 63. Der Kolbenschaft 56 ist federelastisch, um beim axialen Aufstecken auf den Schaft 4 axial zu expandieren und nach Erreichen der Umfangsnut 63 in die Umfangsnut 63 radial einzuschnappen.

Bei der in Fig. 4 gezeigten Ventilnadel 2-3 ist ein nahtlos einstückiger Kolben 8-3 an die nach hinten zeigende Stirnfläche 52 eines nahtlos einstückigen Schaftes 4 angeschweißt durch "Reibschweißen". Zum Zusammenschweißen der beiden Teile 4 und 8-3 werden sie axial aufeinander gepreßt und gleichzeitig um ihre axiale Mittelachse relativ zueinander rotiert. Hierbei entsteht Reibungswärme zwischen ihnen. Nach Erreichen einer vorbestimmten Reibungstemperatur wird die Axialkraft erhöht und die Relativrotation der beiden Teile 4 und 8-3 wird auf Null reduziert, wobei diese beiden Teile miteinander verschweißen. Auf diese Weise entsteht eine dauerhafte Schweißverbindung zwischen dem aus Keramik bestehenden Schaft 4 und dem beispielsweise aus Edelstahl oder einem anderen Material bestehenden Kolben 8-3. Diese Schweißart hat den Vorteil, daß der Schweißvorgang nur kurze Zeit benötigt und kein zusätzliches Schweißmaterial erforderlich.

Fig. 5 zeigt eine Ventilnadel 2-4, bei welcher ein zweiteiliger Kolben 8-4 aus einem becherförmigen hinteren Kolbenteil 40-4 und einem in diesen eingeschraubten ringförmigen vorderen Kolbenteil 42-4 besteht. Die beiden Teile bilden zwischen sich eine Innenumfangsnut 70, in welche ein Sicherungsring 46 (oder ein Ringbund) des Schaftes 4 eingreift und den Kolben 8-4 in beiden Axialrichtungen positioniert. Gemäß anderer Ausführungsform könnte auch hier der Kolbenboden 43 auf der hinteren Stirnseite 52 des Schaftes 4 aufliegen und die axiale Aufstecktiefe des Kolbens auf den Schaft 4 begrenzen. In diesem Falle brauchen die beiden Kolbenteile 40-4 bzw. 42-4 keine Innenumfangsnut 70 zwischen sich zu bilden, sondern es genügt, daß der ringartige vordere Kolbenteil 42-4 eine nach hinten zeigende Anschlagfläche 50 zum Anschlag am Sicherungsring 46 des Schaftes 4 bildet, um ein Abziehen des Kolbens 8-4 von dem Schaft 4 nach hinten zu verhindern.

## Patentansprüche

1. Ventilnadel, enthaltend einen einteiligen Schaft (4), der einen vorderen Schaftendabschnitt (6) aufweist, welcher die Nadelspitze bildet,
wobei am Schaft (4) ein Kolben (8; 8-2; 8-4) befestigt ist und wobei der Schaft (4) aus einem anderen Material besteht als der Kolben (8; 8-2; 8-4),
**dadurch gekennzeichnet,**
**daß** der Kolben (8; 8-4) einen einstückigen hinteren Kolbenteil (40; 40-4) aufweist, der einen Kolbenboden (43) bildet, und einen an diesem hinteren Kolbenteil (40; 40-4) befestigten einstückigen ringförmigen vorderen Kolbenteil (42; 42-4) aufweist, durch welchen sich der Schaft (4) erstreckt, daß der Schaft (4) mit einem ihn umgebenden ringförmigen Vorsprung (46) versehen ist, welcher radial über ihn übersteht und einen nach vorne zeigende Anschlagfläche (48) aufweist, die einer nach hinten zeigenden Anschlagfläche (50) des vorderen Kolbenteiles (42) axial gegenüberliegt und **dadurch** ein Abgleiten des Ringes (42) auf dem Schaft (4) nach hinten verhindert.

2. Ventilnadel nach Anspruch 1,
**dadurch gekennzeichnet,**
**daß** der Kolbenboden (43) einer nach hinten zeigenden Stirnfläche (52) des Schaftes (4) axial gegenüberliegt und auf diese Stirnfläche (52) aufsetzbar ist, um ein Abgleiten des Kolbens (8; 8-4) auf dem Schaft (4) nach vorne zu verhindern.

3. Ventilnadel nach Anspruch 1 oder 2,
**dadurch gekennzeichnet,**
**daß** der hintere Kolbenteil (40; 40-4) einen vom Kolbenboden (43) nach vorne ragenden hohlen zylindrischen Kolbenschaft (56) aufweist, der an dem ringförmigen vorderen Teil (42; 42-4) befestigt ist.

4. Ventilnadel nach einem der Ansprüche 1 bis 3,
**dadurch gekennzeichnet,**
**daß** der vordere Kolbenteil (42) und der hintere Kolbenteil (40) axial ineinandersteckbare Teile sind, daß der vordere Kolbenteil (42) mindestens eine nach vorne zeigende Rastfläche (42-1) und der hintere Kolbenteil (40) mindestens eine nach hinten zeigende Rastfläche (40-1) aufweist, die in einer vorbestimmten Zusammenstecktiefe der beiden Teile (40, 42) automatisch aneinander radial einrastbar sind durch radiale Materialspannung in den beiden Teilen, wobei die Rastflächen (42-1, 40-1) gleiche Durchmesserbereiche haben, so daß die beiden Teile (40, 42) nur durch radiale Expansion des radial äußeren Teiles und/oder durch radiale Kompression des radial inneren Teiles der beiden Teile (40, 42) axial zusammensteckbar sind, um sie miteinander zu verrasten.

5. Ventilnadel nach einem der Ansprüche 1 bis 4,
**dadurch gekennzeichnet,**
**daß** der ringförmige Vorsprung (46) des Schaftes (4) durch einen Sicherungsring (46) gebildet ist, der in eine Umfangsnut (63) des Schaftes (4) eingreift.

6. Ventilnadel nach einem der Ansprüche 1 bis 5,
**dadurch gekennzeichnet,**
**daß** der Schaft (4) und sein ringförmiger Vorsprung (46) zusammen ein einstückiges Teil sind.

7. Ventilnadel, enthaltend einen einteiligen Schaft (4), der einen vorderen Schaftendabschnitt (6) aufweist, welcher die Nadelspitze bildet,
wobei am Schaft (4) ein Kolben (8; 8-2; 8-4) befestigt ist und wobei der Schaft (4) aus einem anderen Material besteht als der Kolben (8; 8-2; 8-4),
**dadurch gekennzeichnet,**
**daß** der Kolben (8-2) auf das hintere Ende des Schaftes (4) aufgesteckt ist und eine nach hinten zeigende Rastfläche (40-1) aufweist, die in eine Umfangsnut (63) des Schaftes (4) radial eingerastet ist und darin axial vor einer nach vorne zeigenden Rastfläche (64-1) des Schaftes liegt.

8. Ventilnadel nach einem der vorhergehenden Ansprüche,
**dadurch gekennzeichnet,**
**daß** der Schaft (4) aus einem abriebfesteren Material als der Kolben (8; 8-2; 8-3; 8-4) besteht.

9. Ventilnadel nach einem der vorhergehenden Ansprüche,
**dadurch gekennzeichnet,**
**daß** der Schaft (4) einstückig aus einem der folgenden Materialien besteht: technische Keramik, insbesondere Silikat-Keramik, Oxid-Keramik, Nicht-Oxid-Keramik, letzteres insbesondere in Form von Karbide oder Nitride, Zirkonsilikat, Mischungen von zwei oder mehr der vorgenannten Materialien.

10. Ventilnadel nach einem der vorhergehenden Ansprüche,
**dadurch gekennzeichnet,**
**daß** der Kolben (8; 8-2; 8-4) oder mindestens ein eine äußere Oberfläche von ihm bildender Teil aus einem der folgenden Materialien besteht: Edelstahl, Messing, Kunststoff.

11. Spritzbeschichtungsgerät, welches mindestens ein Ventil in mindestens einem Beschichtungsflüssigkeitsweg enthält,
**dadurch gekennzeichnet,**
**daß** als Ventilkörper des Ventils eine Ventilnadel (2) nach einem der vorhergehenden Ansprüche vorgesehen ist.

12. Verwendung einer Ventilnadel (2) nach einem der Ansprüche 1 bis 10 als Ventilkörper eines Ventils (2, 14) für Beschichtungsflüssigkeit in einem der folgenden Geräte: Spritzbeschichtungsgerät für Beschichtungsflüssigkeit, Farbwechselgerät für mehrere verschiedene Beschichtungsflüssigkeiten, Versorgungsleitungen für Beschichtungsflüssigkeit in einer Spritzbeschichtungseinrichtung.

## Claims

1. Valve needle, containing a one-piece stem (4) having a front stem end portion (6) which forms the needle point, wherein a piston (8; 8-2; 8-4) is fastened to the stem (4) and wherein the stem (4) consists of a different material from the piston (8; 8-2; 8-4), **characterized in that** the piston (8; 8-4) has a one-piece rear piston part (40; 40-4), which forms a piston base (43), and a one-piece annular front piston part (42; 42-4), which is fastened to this rear piston part (40; 40-4) and through which the stem (4) extends, **in that** the stem (4) is provided with a surrounding annular projection (46), which protrudes radially over it and has a forward-pointing stop face (48), which lies axially opposite a rearward-pointing stop face (50) of the front piston part (42) and thereby prevents the ring (42) from sliding rearwards on the stem (4).

2. Valve needle according to Claim 1,
**characterized in that** the piston base (43) lies axially opposite a rearward-pointing end face (52) of the stem (4) and can be mounted on this end face (52) to prevent the piston (8; 8-4) from sliding forwards on the stem (4).

3. Valve needle according to one of Claims 1 or 2,
**characterized in that** the rear piston part (40; 40-4) has a hollow cylindrical piston skirt (56), which projects forwards from the piston base (43) and is fastened to the annular front part (42; 42-4).

4. Valve needle according to one of Claims 1 to 3, **characterized in that** the front piston part (42) and the rear piston part (40) are parts which can be fitted axially into each other, **in that** the front piston part (42) has at least one forward-pointing latching surface (42-1) and the rear piston part (40) has at least one rearward-pointing latching surface (40-1), which, at a predetermined mating depth of the two parts (40, 42), can automatically be radially locked in place one against the other by material tension in the two parts, the latching surfaces (42-1, 40-1) having the same diameters, so that the two parts (40, 42) can be axially mated only by radial expansion of the radially outer part and/or by radial compression of the radially inner part of the two parts (40, 42) in order to be locked together.

5. Valve needle according to one of Claims 1 to 4, **characterized in that** the annular projection (46) of the stem (4) is formed by a locking ring (46), which engages in a circumferential groove (63) of the stem (4) .

6. Valve needle according to one of Claims 1 to 5, **characterized in that** the stem (4) and its annular projection (46) together are a one-piece part.

7. Valve needle, containing a one-piece stem (4) having a front stem end portion (6) which forms the needle point, wherein a piston (8; 8-2; 8-4) is fastened to the stem (4) and wherein the stem (4) consists of a different material from the piston (8; 8-2; 8-4), **characterized in that** the piston (8-2) is mounted on the rear end of the stem (4) and has a rearward-pointing latching surface (40-1), which is radially engaged in a circumferential groove (63) of the stem (4) and lies therein axially in front of a forward-pointing latching surface (64-1) of the stem.

8. Valve needle according to one of the preceding claims, **characterized in that** the stem (4) consists of a more abrasion-resistant material than the piston (8; 8-2; 8-3; 8-4).

9. Valve needle according to one of the preceding claims, **characterized in that** the stem (4) consists in one piece of one of the following materials: technical ceramic, in particular silicate ceramic, oxide ceramic, non-oxide ceramic, the latter, in particular, in the form of carbides or nitrides, zircon silicate, mixtures of two or more of the aforesaid materials.

10. Valve needle according to one of the preceding claims, **characterized in that** the piston (8; 8-2; 8-4), or at least a part forming an outer surface thereof, consists of one of the following materials: special steel, brass, plastic.

11. Spray-coating apparatus, containing at least one valve in at least one coating liquid path,
**characterized in that** a valve needle (2) according to one of the preceding claims is provided as the valve body of the valve.

12. Use of a valve needle (2) according to one of claims 1 to 10 as the valve body of a valve (2, 14) for coating liquid in one of the following types of apparatus: spray-coating apparatus for coating liquid, colour-changing apparatus for a plurality of different coating liquids, supply lines for coating liquid in a spray-coating device.

## Revendications

1. Aiguille de valve, contenant une tige d'une seule pièce (4) qui présente une portion d'extrémité de tige avant (6), qui forme la pointe de l'aiguille, un piston (8 ; 8-2 ; 8-4) étant fixé sur la tige (4) et la tige (4) se composant d'un autre matériau que le piston (8 ; 8-2 ; 8-4),
**caractérisée en ce que**
le piston (8 ; 8-4) présente une partie de piston arrière d'une seule pièce (40 ; 40-4) qui forme une base de piston (43), et une partie de piston avant (42 ; 42-4) de forme annulaire d'une seule pièce fixée sur cette partie de piston arrière (40 ; 40-4), à travers laquelle s'étend la tige (4), **en ce que** la tige (4) est pourvue d'une saillie (46) de forme annulaire qui l'entoure, laquelle dépasse radialement au-delà de celle-ci et présente une surface de butée (48) tournée vers l'avant, qui est axialement opposée à une surface de butée (50) de la partie de piston avant (42) tournée vers l'arrière, et empêche de ce fait un glissement de la bague (42) vers l'arrière sur la tige (4).

2. Aiguille de valve selon la revendication 1,
**caractérisée en ce que**
la base de piston (43) est axialement opposée à une surface frontale (52) de la tige (4) tournée vers l'arrière, et peut être posée sur cette surface frontale (52) afin d'empêcher un glissement du piston (8 ; 8-4) vers l'avant sur la tige (4).

3. Aiguille de valve selon la revendication 1 ou 2,
**caractérisée en ce que**
la partie de piston arrière (40 ; 40-4) présente une tige de piston cylindrique creuse (56) saillant vers l'avant depuis la base de piston (43), qui est fixée à la partie avant annulaire (42 ; 42-4).

4. Aiguille de valve selon l'une quelconque des revendications 1 à 3,
**caractérisée en ce que**
la partie de piston avant (42) et la partie de piston arrière (40) sont des parties pouvant s'emboîter axialement l'une dans l'autre, **en ce que** la partie de piston avant (42) présente au moins une surface d'encliquetage (42-1) tournée vers l'avant et la partie de piston arrière (40) présente au moins une surface d'encliquetage (40-1) tournée vers l'arrière, qui peuvent s'encliqueter radialement automatiquement l'une contre l'autre à une profondeur d'enfichage prédéterminée des deux parties (40, 42), par contrainte radiale du matériau dans les deux parties, les surfaces d'encliquetage (42-1, 40-1) ayant les mêmes régions de diamètre de sorte que les deux parties (40, 42) ne puissent être enfichées axialement l'une dans l'autre que par expansion radiale de la partie radialement extérieure et/ou par compression radiale de la partie radialement intérieure des deux parties (40, 42), afin de les encliqueter l'une dans l'autre.

5. Aiguille de valve selon l'une quelconque des revendications 1 à 4,
**caractérisée en ce que**
la saillie annulaire (46) de la tige (4) est formée par une bague de fixation (46) qui vient en prise dans une rainure périphérique (63) de la tige (4).

6. Aiguille de valve selon l'une quelconque des revendications 1 à 5,
**caractérisée en ce que**
la tige (4) et sa saillie annulaire (46) forment ensemble une partie d'une seule pièce.

7. Aiguille de valve, contenant une tige (4) d'une seule pièce, qui présente une portion d'extrémité de tige avant (6) qui forme la pointe de l'aiguille, un piston (8 ; 8-2 ; 8-4) étant fixé sur la tige (4) et la tige (4) se composant d'un autre matériau que le piston (8 ; 8-2 ; 8-4),
**caractérisée en ce que**
le piston (8-2) est enfiché sur l'extrémité arrière de la tige (4) et présente une surface d'encliquetage (40-1) tournée vers l'arrière, qui est encliquetée radialement dans une rainure périphérique (63) de la tige (4) et qui se trouve dans celle-ci axialement devant une surface d'encliquetage (64-1) de la tige tournée vers l'avant.

8. Aiguille de valve selon l'une quelconque des revendications précédentes,
**caractérisée en ce que**
la tige (4) se compose d'un matériau plus résistant à l'abrasion que le piston (8 ; 8-2 ; 8-3 ; 8-4).

9. Aiguille de valve selon l'une quelconque des revendications précédentes,
**caractérisée en ce que**
la tige (4) se compose d'une seule pièce de l'un des matériaux suivants : céramique technique, notamment céramique de silicate, céramique à l'oxyde, céramique sans oxyde, cette dernière se présentant notamment sous forme de carbures ou de nitrures, silicate de zircone, et des mélanges de deux ou plus des matériaux cités.

10. Aiguille de valve selon l'une quelconque des revendications précédentes,
**caractérisée en ce que**
le piston (8 ; 8-2 ; 8-4) ou au moins une partie en formant une surface extérieure, se compose de l'un des matériaux suivants : acier noble, laiton, plastique.

11. Appareil de revêtement par pulvérisation, contenant au moins une valve dans au moins une trajectoire du liquide de revêtement,
**caractérisé en ce que**
l'on prévoit comme corps de valve une aiguille de valve (2) selon l'une quelconque des revendications précédentes.

12. Utilisation d'une aiguille de valve (2) selon l'une quelconque des revendications 1 à 10 en tant que corps de valve d'une valve (2, 14) pour un liquide de revêtement dans l'un des appareils suivants : appareil de revêtement par pulvérisation pour un liquide de revêtement, appareil de changement de couleurs pour plusieurs liquides de revêtement différents, conduites d'alimentation pour liquide de revêtement dans un dispositif de revêtement par pulvérisation.
